# EUROPEAN PATENT SPECIFICATION

(11) **EP 1 978 426 B1**
(45) Date of publication and mention of the grant of the patent: **14.12.2011**
(21) Application number: 08004755.8
(22) Date of filing: 14.03.2008
(51) Int. Cl.: G05B 19/10, D06F 39/00

(54) **Household electrical appliance with double interface and set of household electrical appliances equipped with a shared control panel**
Elektrisches Haushaltsgerät mit Doppelschnittstelle und Satz elektrischer Haushaltsgeräte mit einer gemeinsamen Steuerpult
Appareil électroménager doté d'une double interface et ensemble d'appareils électroménagers dotés d'un panneau de commande partagé

(30) Priority: 05.04.2007 IT RN20070020
(43) Date of publication of application: 08.10.2008
(60) Divisional application: 11179100.0
(73) Proprietor: Indesit Company S.p.A., 60044 Fabriano (AN) (IT)
(72) Inventor: Bombardieri, Giovanni, 24021 Albino (BG) (IT); Mariotti, Costantino, 06028 Sigillo (PG) (IT); La Bella, Savio, 60044 Fabriano (AN) (IT)
(74) Representative: Santonicola, Paolo

(56) References cited:
- EP-A- 1 178 507
- DE-A1- 10 307 756
- US-A- 5 698 826
- US-A1- 2002 116 959
- US-A1- 2003 052 514
- US-A1- 2006 225 302

## Description

The present invention relates to a household electrical appliance and a set of household electrical appliances in the white goods category. The term "white goods" refers, for example, to household electrical appliances intended for washing and/or drying clothes or dishes, for refrigerating foods or drinks, cooking foods, etc. For example, the category of white goods includes household electrical appliances such as: washing machines, washer-dryers, tumble dryers, dishwashers, refrigerators, freezers, fridge-freezers, hobs, home cookers, ovens, hoods, home boilers. These are in contrast to brown gods, such as televisions, video recorders, magnetic media players, etc.

In order to dialogue with the user, "white goods" usually have a user interface integrated in the outer cover of the machine.

Following the development of household electrical appliances which are increasingly complex and full of electronic components, the user interface of such machines has acquired an increasing number of knobs, push-buttons, displays and more generally selectors able to control all of the various functions.

This has allowed the user the best possible control of all of the potential of the machine, but the household electrical appliances described above also have several disadvantages.

In particular, some users could be confused by the large number of selectors needed to control all of the various functions, especially if it is one of the first times they have used such a machine and they are not very familiar with it. Such a problem is accentuated above all in the case of elderly people or in any event users accustomed to old household electrical appliances for which fewer adjustments and input parameters were required to make the appliance work.

The present invention has for an aim to overcome the above-mentioned disadvantages by providing a household electrical appliance which helps the user to control the basic functions of the appliance but at the same time allows the more expert user to make full use of all of the potential and the technology made available by the appliance.

Another aim of the present invention is to provide a set of household electrical appliances which helps the user to control the basic functions of the set of household electrical appliances but at the same time allows the more expert user to make full use of all of the potential and the technology made available by the set of household electrical appliances.

These aims and others, which are more apparent in the description which follows, are achieved, in accordance with the present invention, by a household electrical appliance with the structural and functional features described in the independent claims herein. Alternative embodiments of the household electrical appliance are described in the dependent claims.

Document US 5,698,826 discloses a household appliance having the features listed in the preamble of the independent claims.

The invention is described in more detail below, with reference to the accompanying drawings, which illustrate a preferred non-limiting embodiment of the invention, and in which:
- Figures 1 to 3 illustrate three different configurations of a household electrical appliance in accordance with the present invention;
- Figure 4 is a perspective view of a component of a household electrical appliance in accordance with the present invention.

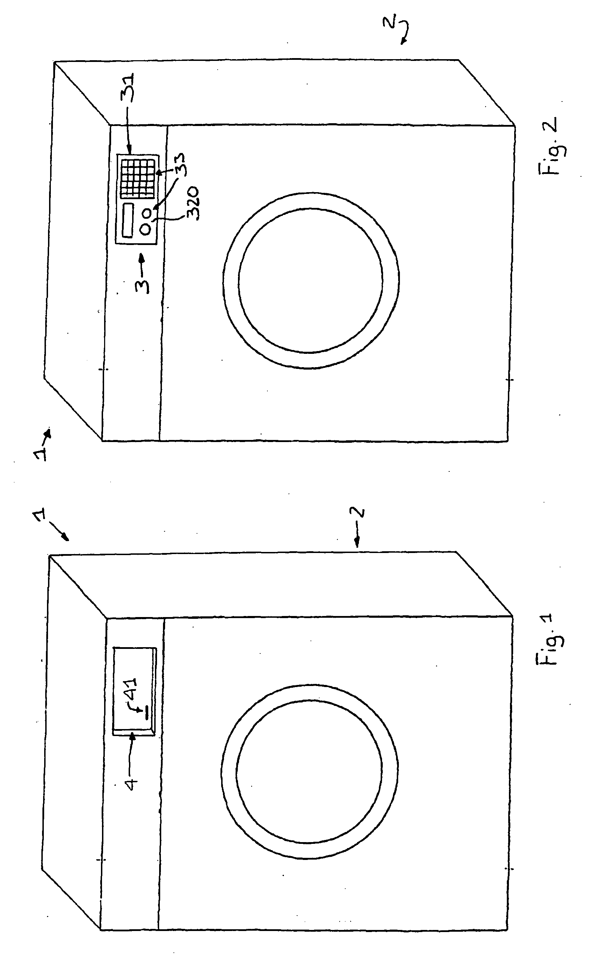

With reference to Figures 1 to 3 the numeral 1 denotes a household electrical appliance in accordance with the present invention.

Said household electrical appliance, in the white goods category, comprises an operating unit 2 and a control panel 3 for the operating unit 2. The operating unit 2 consists of the set of means and actuators which allow the commands issued using the control panel 3 to be turned into actual actions.

As already indicated, the term "white goods" refers to household electrical appliances intended for washing clothes or dishes, for refrigerating foods or drinks, cooking foods, etc. They are usually used in the kitchen or bathroom. For example, the category of "white goods" includes household electrical appliances such as: washing machines, washer-dryers, tumble dryers, refrigerators, freezers, fridge-freezers, home cookers, hobs, ovens, hoods, home boilers, etc.

They differ from so-called "brown goods" which instead include televisions, video recorders, music players.

Figure 2 illustrates by way of example, without limiting the scope of the invention, the control panel 3 comprising a first user interface 31.

The control panel 3 comprises a second user interface 32, separate from the first user interface 31. The second user interface 32 is simplified compared with the first user interface 31.

The configuration of the control panel 3 can be varied between a first configuration and a second configuration. In the first configuration the control panel 3 makes the first user interface 31 directly accessible to the user. In the second configuration it makes the second user interface 32 directly accessible to the user. The second configuration is different from the first configuration. In this description, indicating that an object is "directly accessible" to the user means that the user can make contact with this object without performing further intermediate operations.

The first and second interfaces 31, 32 are inseparably connected to one another in every control panel 3 configuration. Advantageously, the first and second interfaces 31, 32 are made on the control panel 3 or on the same portion of the control panel 3. In this way, it is easier and faster for the user to pass from one configuration to the other by acting on the same portion of the control panel 3.

Defining the second interface 32 as a simplified interface means that said interface controls fewer operating unit 2 functions than those controlled by the first user interface 31.

Both the first and second user interfaces 31, 32 comprise a respective predetermined number of selectors 33. The term selectors refers, for example, to keys or knobs, with which the user can issue commands to the household electrical appliance 1.

Advantageously, the operating unit 2 functions controlled by the selectors 33 of the second user interface 32 can also be controlled by the selectors 33 of the first user interface 31.

The simplified second interface 32 has fewer selectors 33 than the first user interface 31 selectors 33. Advantageously, the number of physically separate selectors 33 belonging to the simplified second interface 32 is less than half the number of physically separate selectors 33 belonging to the first interface 31. Each selector 33 belonging to the second user interface 32 preferably controls a single function of the operating unit 2.

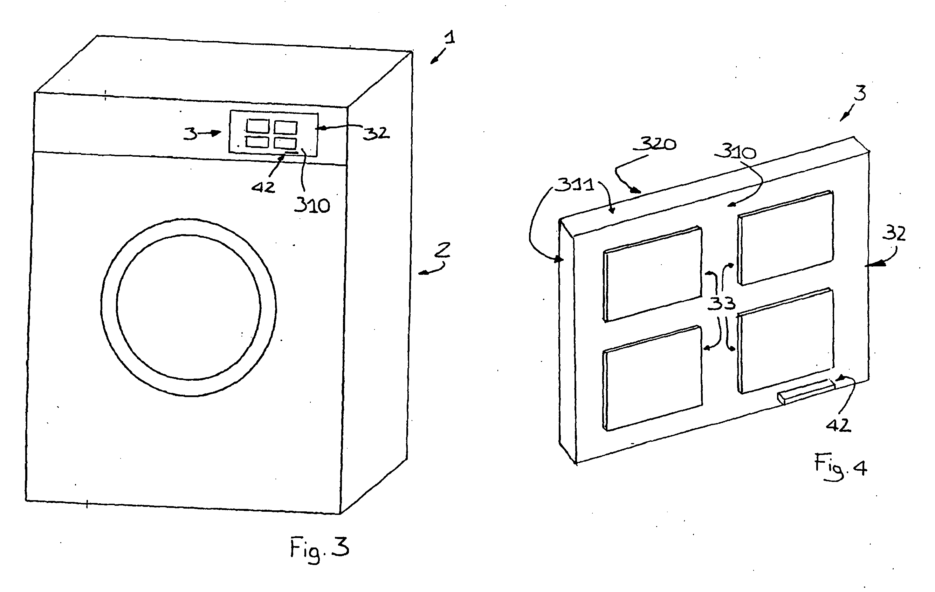

Reference is made to Figures 1 to 3, which illustrate a washing machine. The simplified second interface 32 illustrated in Figure 3 for example has only four keys usually associated with the basic functions of the household electrical appliance 1 or in any case those most commonly used. In the case of the washing machine, for example and without limiting the scope of the inventive concept, the following functions could be associated with the four keys: ON/OFF, start delicates washing programme, start cotton items 60° washing programme, start "fast cycle" programme.

The first interface 31, illustrated in Figure 2 by way of example and without limiting the scope of the invention, is much more complex.

Advantageously, the first user interface 31 comprises a display which allows an exchange of information between the household electrical appliance 1 and the user. Such a display or more simply several warning lights may also be present on the simplified second interface 32 (solution not illustrated).

Advantageously, the user can associate the commands of the operating unit 2 functions most commonly used by the user with the selectors 33 of the second interface 32.

For that purpose, the first user interface 31 allows the second user interface 32 to be programmed by associating the command for specific operating unit 2 functions with the selectors 33 of the second user interface 32.

Alternatively, the second user interface 32 can be programmed using a remote centre, so as to associate the command for specific operating unit 2 functions with the selectors 33 of the second user interface 32.

Said remote centre may consist of an external electronic device (for example a computer or a palmtop device or a mobile phone) which can be connected to the control panel 3 for example wirelessly or using a cable (for example using a USB or FireWire port on the control panel 3).

Advantageously, the control panel 3 is operatively connected to the operating unit 2 by wireless means for the transfer of commands and information.

As Figure 1 shows, the household electrical appliance 1 comprises a housing cavity 4 of the control panel 3. The control panel 3 is not illustrated in Figure 1. In the first and second configurations the control panel 3 is associated with the housing cavity 4 as illustrated by way of example and without limiting the scope of the invention in Figures 2 and 3. In particular, in the first configuration the control panel 3 hides the second user interface 32. In contrast, in the second configuration the control panel 3 hides the first user interface 31.

The first and second user interfaces 31, 32 are made on two opposite surfaces 310, 320 of the control panel 3. Advantageously, the control panel 3 may be extracted and separated from the operating unit 2 (see for example Figure 1).

In such a case, in a first construction solution, to pass from the first to the second user configuration the user must advantageously extract the control panel 3 from the housing cavity 4, then insert it in the cavity again after rotating it through 180° about a vertical axis. In contrast, in a second construction solution the rotation could be performed about a horizontal axis, depending on the orientation of the selectors 33 relative to one another in the first and the second interfaces 31, 32. In this way, the surface which in the previous first or second configuration was facing the outside of the household electrical appliance 1 will now be facing the inside of the household electrical appliance 1 and will not be visible to the user.

In another construction solution the control panel 3 is connected to the housing cavity 4 by at least one rotation pin, said pin allowing rotation of the control panel 3 from the first to the second configuration or vice versa. Appropriately, by pushing an appropriate portion of the control panel 3, the user can therefore make the panel 3 rotate about the pin. Said rotation may be performed about a horizontal axis or a vertical axis. Advantageously, but not necessarily in said construction solution, the control panel 3 cannot be removed from the housing cavity 4.

In an alternative construction solution referred to by way of example and not illustrated, the control panel 3 comprises a door. The door could for example be connected by a hinge to the remaining parts of the control panel 3. When the door is closed it covers the user interface located below the door. In that way said interface is hidden from the user and in order to gain access to it the user must first move aside the door. On the outward facing surface of the door when it is closed there is another interface which the user consequently has direct access to even when the door is closed. In such a construction solution the simplified interface is preferably on the surface of the door to which the user has direct access even when the door is closed.

The housing cavity 4 comprises a first connector 41. The control panel 3 comprises a second connector 42 which connects to the first connector 41 when the control panel 3 is inserted in the housing cavity 4. The first and second connectors 41, 42 can be used to transfer commands or information between the control panel 3 and the operating unit 2. In the construction solution in which the first and second interfaces 31, 32 are made on two opposite surfaces 310, 320 of the control panel 3, the second connector 42 is made on both of the two opposite surfaces 310, 320. In that way, connection between the first and second connectors 41, 42 is guaranteed in both the first and the second configurations. Alternatively, the second connector 42 could be made on the lateral surface of the control panel 3. In the latter case the first connector 41 will also be in a position in the housing cavity 4 suitable for allowing connection to the second connector 42 following insertion of the control panel 3 in the housing cavity 4.

Advantageously, the control panel 3 comprises a rechargeable electric battery integrated in the control panel 3.

Insertion of the control panel 3 in the housing cavity 4 allows the electric battery to be connected to battery recharging means. Therefore, the operating unit 2 may act as a transformer between the mains power supply and the control panel 3. Said connection may, for example, be made through the first and second connectors 41, 42.

The present invention also relates to a set of household electrical appliances which belong to the white goods category, comprising:
- a household electrical appliance of the type previously described;
- at least one other operating unit 2 which is part of a household electrical appliance belonging to the white goods category.

Advantageously, the control panel 3 can be physically applied to each operating unit 2 both in the first and in the second operating configurations and allows control of at least the operating unit 2 to which it is applied.

Each operating unit 2 comprises its own housing cavity 4 for the control panel 3. The control panel 3 of the set of household electrical appliances is of the type described above with reference to an individual household electrical appliance 1 and interfaces with the remaining parts of each individual operating unit 2 in the set as described above with reference to an individual household electrical appliance 1.

In an alternative construction solution, only one operating unit 2 comprises the housing cavity 4 for the control panel 3 and the other operating units 2 are controlled wirelessly.

In particular, the control panel 3 comprises means for recognising the operating unit 2 to which it is operatively connected. This allows the control panel 3 to adapt its operation based on the type of household electrical appliance 1 to which it is connected.

The simplified second interface 32 comprises selectors 33. Each selector 33 belonging to the second interface 32 is associated with at least one predetermined function of the operating unit 2, said function being variable based on the household electrical appliance 1 to which the control panel 3 is operatively connected. For example, if the control panel 3 is applied to a washing machine, the various selectors 33 could be associated with the start of different washing programmes (for delicates, wool, cotton). If it is applied to a dishwasher the various keys could be associated with different washing cycles (depending on the type of dishes: glasses, pans, etc.). If it is applied to a cooker hood the various keys could be associated with different extractor extraction speeds. If it is applied to an oven or a home cooker the various selectors will be associated with different cooking programmes.

Advantageously, in a particular non-limiting construction solution the control panel 3 can remotely control the operating units 2 belonging to the set of household electrical appliances.

The invention brings the important advantage of allow users to dialogue with the same household electrical appliance using two different interfaces, a first interface which allows full use of the potential of the household electrical appliance and a second interface which makes household electrical appliance operation extremely intuitive and easy.

In practice, all of the materials used, as well as the dimensions may be any, according to requirements.

## Claims

1. A household electrical appliance belonging to the white goods category, comprising an operating unit (2) and a control panel (3) for the operating unit (2);
the operating unit (2) consisting of the set of means and actuators which allow the commands issued using the control panel (3) to be turned into actual actions, the control panel (3) comprising:
- a first user interface (31);
- a second user interface (32) separate from the first user interface (31) and simplified compared with the first user interface (31), the simplified second user interface (32) controlling fewer operating unit (2) functions than the functions controlled by the first user interface (31);
both the first and the second user interfaces (31, 32) comprising a respective predetermined number of selectors (33);
the control panel (3) having a configuration which can vary between a first configuration in which it makes the first user interface (31) directly accessible to the user and a second configuration in which it makes the second user interface (32) directly accessible to the user, said second configuration being different from the first configuration; the household electrical appliance being **characterised in that**:
i) the household electrical appliance comprises a housing cavity (4) of the control panel (3), the first and second user interfaces (31, 32) being made on two opposite surfaces (310, 320) of the control panel (3), in the first and second configurations the control panel (3) being associated with the housing cavity (4) and
ii) the first user interface (31) allows programming of the second user interface (32) by associating the command for specific operating unit (2) functions with the selectors (33) belonging to the second user interface (32).

2. The household electrical appliance according to claim 1, **characterised in that** the first and second interfaces (31, 32) are inseparably connected to one another in every control panel (3) configuration.

3. The household electrical appliance according to claim 1 or 2, **characterised in that** the simplified second interface (32) has fewer selectors (33) than the number of selectors (33) belonging to the first user interface (31).

4. The household electrical appliance according to any of the previous claims, **characterised in that** each selector (33) belonging to the second user interface (32) controls a single operating unit (2) function.

5. The household electrical appliance according to any of the previous claims, **characterised in that** the second user interface (32) can be programmed using a remote centre so as to associate the command for specific operating unit (2) functions with the selectors (33) belonging to the second user interface (32).

6. The household electrical appliance according to any of the foregoing claims, **characterised in that** the control panel (3) is operatively connected to the operating unit (2) by wireless means for the transfer of commands and information.

7. The household electrical appliance according to any of the foregoing claims, **characterised in that** the control panel (3) is connected to the housing cavity (4) by at least one rotation pin, said pin allowing rotation of the control panel (3) from the first to the second configuration or vice versa.

8. The household electrical appliance according to any of the foregoing claims from 1 to 6, **characterised in that** the control panel (3) is able to be extracted and separated from the operating unit (2).

9. The household electrical appliance according to any of the foregoing claims, **characterised in that** the housing cavity (4) comprises a first connector (41), the control panel (3) comprising a second connector (42) which connects to the first connector (41) when the control panel (3) is inserted in the housing cavity (4).

10. The household electrical appliance according to any of the foregoing claims, **characterised in that** in the second operating configuration the control panel (3) hides the first user interface (31).

11. The household electrical appliance according to any of the foregoing claims, **characterised in that** in the first operating configuration the control panel (3) hides the second user interface (32).

12. The household electrical appliance according to any of the foregoing claims, **characterised in that** the control panel (3) comprises a rechargeable electric battery integrated in the control panel (3).

13. The household electrical appliance according to claim 12, **characterised in that** insertion of the control panel (3) in the housing cavity (4) allows connection of the electric battery to battery recharging means.

14. A set of household electrical appliances belonging to the white goods category, the set comprising a first household electrical appliance according to any previous claim,
**characterised in that** the set comprises at least one further household appliance comprising an operating unit;
the control panel (3) of said first household appliance being able to be physically applied to each operating unit (2) both in the first and the second operating configurations and allowing control of at least the operating unit (2) to which it is applied.

15. The set of household electrical appliances according to claim 14, **characterised in that** the control panel (3) of said first household electrical appliance can remotely control the operating units (2) belonging to the set of household electrical appliances.

16. The set of household electrical appliances classed as white goods according to claim 14 or 15, **characterised in that** the control panel (3) of said first household electrical appliance comprises means for recognising the operating unit (2) to which it is operatively connected;
and **characterised in that** the simplified second interface (32) of the control panel (3) of said first household electrical appliance comprises selectors (33), each selector (33) belonging to the second interface (33) of the control panel (3) of said first household electrical appliance being associated with at least one predetermined function, said function varying based on the type of household electrical appliance (1) to which the control panel (3) of said first household electrical appliance is operatively connected.

## Patentansprüche

1. Zur Weißware-Kategorie gehörendes elektrisches Haushaltsgerät, das eine Betriebseinheit (2) und eine Steuertafel (3) für die Betriebseinheit (2) aufweist;
wobei die Betriebseinheit (2) aus dem Satz von Mitteln und Aktuatoren besteht, die erlauben, dass mittels der Steuertafel (3) ausgegebene Befehle in tatsächliche Aktionen umgesetzt werden, wobei die Steuertafel (3) umfasst:
- eine erste Benutzerschnittstelle (31);
- eine zweite Benutzerschnittstelle (32), die von der ersten Benutzerschnittstelle (31) getrennt ist und im Vergleich zur ersten Benutzerschnittstelle (31) vereinfacht ist, wobei die vereinfachte zweite Benutzerschnittstelle (32) weniger Funktionen der Betriebseinheit (2) steuert als die von der ersten Benutzerschnittstelle (31) gesteuerten Funktionen;
wobei beide ersten und zweiten Benutzerschnittstellen (31, 32) eine jeweilige vorbestimmte Anzahl von Wählelementen (33) aufweisen; wobei die Steuertafel (3) eine Konfiguration hat, die sich zwischen einer ersten Konfiguration, die die erste Benutzerschnittstelle (31) dem Benutzer direkt zugänglich macht, und einer zweiten Konfiguration, die die zweite Benutzerschnittstelle (32) dem Benutzer direkt zugänglich macht, verändern kann, wobei sich die zweite Konfiguration von der ersten Konfiguration unterscheidet, wobei das elektrische Haushaltsgerät **dadurch gekennzeichnet ist, dass**:
i) das elektrische Haushaltsgerät eine Aufnahmevertiefung (4) der Steuertafel (3) aufweist, wobei die ersten und zweiten Benutzerschnittstellen (31, 32) an zwei entgegengesetzten Oberflächen (310, 320) der Steuertafel (3) ausgebildet sind, wobei in den ersten und zweiten Konfigurationen die Steuertafel (3) der Aufnahmevertiefung (4) zugeordnet ist und
ii) die erste Benutzerschnittstelle (31) durch Zuordnung des Befehls für spezifische Funktionen der Betriebseinheit (2) zu den zur zweiten Benutzerschnittstelle (32) gehörenden Wählelementen (33) eine Programmierung der zweiten Benutzerschnittstelle (32) erlaubt.

2. Das elektrische Haushaltsgerät nach Anspruch 1, **dadurch gekennzeichnet, dass** in jeder Konfiguration der Steuertafel (3) die ersten und zweiten Schnittstellen (31, 32) untrennbar miteinander verbunden sind.

3. Das elektrische Haushaltsgerät nach Anspruch 1 oder 2, **dadurch gekennzeichnet, dass** die vereinfachte zweite Schnittstelle (32) weniger Wählelemente (33) als die Anzahl der zur ersten Benutzerschnittstelle (31) gehörenden Wählelemente (33) aufweist.

4. Das elektrische Haushaltsgerät nach einem der vorhergehenden Ansprüche, **dadurch gekennzeichnet, dass** jedes zur zweiten Benutzerschnittstelle (32) gehörende Wählelement (33) eine einzige Funktion der Betriebseinheit (2) steuert.

5. Das elektrische Haushaltsgerät nach einem der vorhergehenden Ansprüche, **dadurch gekennzeichnet, dass** die zweite Benutzerschnittstelle (32) mittels eines Fernsteuerzentrums programmiert werden kann, um den Befehl für spezifische Funktionen der Betriebseinheit (2) den zur zweiten Benutzerschnittstelle (32) gehörenden Wählelementen (33) zuzuordnen.

6. Das elektrische Haushaltsgerät nach einem der vorhergehenden Ansprüche, **dadurch gekennzeichnet, dass** die Steuertafel (3) mit der Betriebseinheit (2) durch drahtlose Mittel für die Übertragung von Befehlen und Information betriebsmäßig verbunden ist.

7. Das elektrische Haushaltsgerät nach einem der vorhergehenden Ansprüche, **dadurch gekennzeichnet, dass** die Steuertafel (3) mit der Aufnahmevertiefung (4) durch zumindest einen Drehzapfen verbunden ist, welcher eine Drehung der Steuertafel (3) von der ersten zur zweiten Konfiguration und zurück erlaubt.

8. Das elektrische Haushaltsgerät nach einem der vorhergehenden Ansprüche von 1 bis 6, **dadurch gekennzeichnet, dass** die Steuertafel (3) von der Betriebseinheit abnehmbar und trennbar ist.

9. Das elektrische Haushaltsgerät nach einem der vorhergehenden Ansprüche, **dadurch gekennzeichnet, dass** die Aufnahmevertiefung (4) einen ersten Anschluss (41) aufweist, wobei die Steuertafel (3) einen zweiten Anschluss (42) aufweist, der den ersten Anschluss (41) anschließt, wenn die Steuertafel (3) in die Aufnahmevertiefung (4) eingegesetzt ist.

10. Das elektrische Haushaltsgerät nach einem der vorhergehenden Ansprüche, **dadurch gekennzeichnet, dass** in der zweiten Betriebskonfiguration die Steuertafel (3) die erste Benutzerschnittstelle (31) verdeckt.

11. Das elektrische Haushaltsgerät nach einem der vorhergehenden Ansprüche, **dadurch gekennzeichnet, dass** in der ersten Betriebskonfiguration die Steuertafel (3) die zweite Benutzerschnittstelle (32) verdeckt.

12. Das elektrische Haushaltsgerät nach einem der vorhergehenden Ansprüche, **dadurch gekennzeichnet, dass** die Steuertafel (3) eine wiederaufladbare elektrische Batterie aufweist, die in die Steuertafel (3) integriert ist.

13. Das elektrische Haushaltsgerät nach Anspruch 12, **dadurch gekennzeichnet, dass** das Einsetzen der Steuertafel (3) in die Aufnahmevertiefung (4) eine Verbindung der elektrischen Batterie mit einem Batterienachlademittel erlaubt.

14. Satz von zur Weißware-Kategorie gehörenden elektrischen Haushaltsgeräte, wobei der Satz ein erstes elektrisches Haushaltsgerät nach einem vorhergehenden Anspruch aufweist,
**dadurch gekennzeichnet, dass** der Satz zumindest ein weiteres, eine Betriebseinheit aufweisendes Haushaltsgerät umfasst;
wobei die Steuertafel (3) des ersten Haushaltsgeräts an jede Betriebseinheit (2) in beiden ersten und zweiten Betriebskonfigurationen physisch anbringbar ist und die Steuerung von zumindest der Betriebseinheit (2) erlaubt, an der sie angebracht ist.

15. Der Satz von elektrischen Haushaltsgeräten nach Anspruch 14, **dadurch gekennzeichnet, dass** die Steuertafel (3) des ersten elektrischen Haushaltsgeräts die zu dem Satz von elektrischen Haushaltsgeräten gehörenden Betriebseinheiten (2) fernsteuern kann.

16. Der Satz von als weiße Ware klassifizierten elektrischen Haushaltsgeräten nach Anspruch 14 oder 15, **dadurch gekennzeichnet, dass** die Steuertafel (3) des ersten elektrischen Haushaltsgeräts Mittel zum Erkennen der Betriebseinheit (2), mit der sie betriebsmäßig verbunden ist, aufweist;
und **dadurch gekennzeichnet, dass** die vereinfachte zweite Schnittstelle (32) der Steuertafel (3) des ersten elektrischen Haushaltsgeräts Wählelemente (33) aufweist, wobei jedes Wählelement (33), das zur zweiten Schnittstelle (33) der Steuertafel (3) des ersten elektrischen Haushaltsgeräts gehört, zumindest einer vorbestimmten Funktion zugeordnet ist, wobei sich die Funktion basierend auf dem Typ des elektrischen Haushaltsgeräts (1) ändert, mit dem die Steuertafel (3) des ersten elektrischen Haushaltsgeräts betriebsmäßig verbunden ist.

## Revendications

1. Appareil électroménager appartenant à la catégorie des produits blancs, comportant une unité de fonctionnement (2) et un tableau de commande (3) correspondant à l'unité de fonctionnement (2),
l'unité de fonctionnement (2) étant constituée de l'ensemble des moyens et des actionneurs qui permettent aux commandes délivrées en utilisant le tableau de commande (3) d'être transformées en actions réelles, le tableau de commande (3) comportant .
- une première interface utilisateur (31) ;
- une seconde interface utilisateur (32) séparée de la première interface utilisateur (31) et simplifiée en comparaison à ladite première interface utilisateur (31), la seconde interface utilisateur simplifiée (32) commandant un nombre de fonctions de l'unité de fonctionnement (2) moindre que le nombre de fonctions commandées par la première interface utilisateur (31) ;
les première et seconde interfaces utilisateur (31, 32) comprenant toutes deux un nombre prédéterminé respectif de sélecteurs (33) ;
le tableau de commande (3) présentant une configuration qui peut varier entre une première configuration dans laquelle on rend la première interface utilisateur (31) directement accessible à l'utilisateur et une seconde configuration dans laquelle on rend la seconde interface utilisateur (32) directement accessible à l'utilisateur, ladite seconde configuration étant différente de la première configuration ; l'appareil électroménager étant **caractérisé en ce que** :
i) l'appareil électroménager comporte une cavité de logement (4) du tableau de commande (3), les première et seconde interfaces utilisateur (31, 32) étant formées sur les deux surfaces opposées (310, 320) du tableau de commande (3), dans les première et seconde configurations le tableau de commande (3) étant associé à la cavité de logement (4) et
ii) la première interface utilisateur (31) permet la programmation de la seconde interface utilisateur (32) en associant la commande destinée aux fonctions spécifiques de l'unité de fonctionnement (2) aux sélecteurs (33) appartenant à la seconde interface utilisateur (32).

2. Appareil électroménager selon la revendication 1, **caractérisé en ce que** les première et seconde interfaces (31, 32) sont connectées l'une à l'autre de façon inséparable dans toute configuration du tableau de commande (3).

3. Appareil électroménager selon la revendication 1 ou 2, **caractérisé en ce que** la seconde interface simplifiée (32) possède un nombre de sélecteurs (33) plus petit que le nombre de sélecteurs (33) appartenant à la première interface utilisateur (31).

4. Appareil électroménager selon l'une quelconque des revendications précédentes, **caractérisé en ce que** chaque sélecteur (33) appartenant à la seconde interface utilisateur (32) commande une seule fonction de l'unité de fonctionnement (2).

5. Appareil électroménager selon l'une quelconque des revendications précédentes, **caractérisé en ce que** la seconde interface utilisateur (32) peut être programmée en utilisant un centre serveur distant de façon à associer la commande destinée aux fonctions spécifiques de l'unité de fonctionnement (2) avec les sélecteurs (33) appartenant à la seconde interface utilisateur (32).

6. Appareil électroménager selon l'une quelconque des revendications précédentes, **caractérisé en ce que** le tableau de commande (3) est connecté fonctionnellement à l'unité de fonctionnement (2) par des moyens sans fil pour le transfert des commandes et de l'information.

7. Appareil électroménager selon l'une quelconque des revendications précédentes, **caractérisé en ce que** le tableau de commande (3) est connecté à la cavité de logement (4) par au moins une broche de rotation, ladite broche permettant une rotation du tableau de commande (3) de la première configuration à la seconde configuration ou vice versa.

8. Appareil électroménager selon l'une quelconque des revendications précédentes 1 à 6, **caractérisé en ce que** le tableau de commande (3) peut être extrait et séparé de l'unité de fonctionnement (2).

9. Appareil électroménager selon l'une quelconque des revendications précédentes, **caractérisé en ce que** la cavité de logement (4) comporte un premier connecteur (41), le tableau de commande (3) comprenant un second connecteur (42) qui se connecte au premier connecteur (41) lorsque le tableau de commande (3) est inséré dans la cavité de logement (4).

10. Appareil électroménager selon l'une quelconque des revendications précédentes, **caractérisé en ce que** dans la seconde configuration le tableau de commande (3) cache la première interface utilisateur (31).

11. Appareil électroménager selon l'une quelconque des revendications précédentes, **caractérisé en ce que**, dans la première configuration de fonctionnement, le tableau de commande (3) cache la seconde interface utilisateur (32).

12. Appareil électroménager selon l'une quelconque des revendications précédentes, **caractérisé en ce que** le tableau de commande (3) comporte une batterie électrique rechargeable intégrée dans le tableau de commande (3).

13. Appareil électroménager selon la revendication 12, **caractérisé en ce que** l'insertion du tableau de commande (3) dans la cavité de logement (4) permet une connexion de la batterie électrique à des moyens de recharge de batterie.

14. Ensemble d'appareils électroménagers appartenant à la catégorie des produits blancs, l'ensemble comprenant un premier appareil électroménager selon l'une quelconque des revendications précédentes,
**caractérisé en ce que** l'ensemble comporte au moins un autre appareil ménager comprenant une unité de fonctionnement ;
le tableau de commande (3) dudit premier appareil ménager pouvant être appliqué physiquement à chaque unité de fonctionnement (2) à la fois dans la première et dans la seconde configurations de fonctionnement et permettant la commande d'au moins l'unité de fonctionnement (2) à laquelle il est appliqué.

15. Ensemble d'appareils électroménagers selon la revendication 14, **caractérisé en ce que** le tableau de commande (3) dudit premier appareil électroménager peut commander à distance les unités de fonctionnement (2) appartenant à l'ensemble des appareils électroménagers.

16. Ensemble d'appareils électroménagers classés dans la catégorie des produits blancs selon la revendication 14 ou 15, **caractérisé en ce que** le tableau de commande (3) dudit premier appareil électroménager comporte des moyens pour reconnaître l'unité de fonctionnement (2) à laquelle il est fonctionnellement connecté ;
et **caractérisé en ce que** la seconde interface simplifiée (32) du tableau de commande (3) dudit premier appareil électroménager comporte des sélecteurs (33), chaque sélecteur (33), appartenant à la seconde interface (32) du tableau de commande (3) dudit premier appareil électroménager, étant associé à au moins une fonction prédéterminée, ladite fonction variant sur la base du type d'appareil électroménager (1) auquel le tableau de commande (3) dudit premier appareil électroménager est fonctionnellement connecté.
